# EUROPÄISCHE PATENTSCHRIFT

(11) **EP 0 645 170 B1**
(45) Veröffentlichungstag und Bekanntmachung des Hinweises auf die Patenterteilung: **21.04.1999**
(21) Anmeldenummer: 94112563.5
(22) Anmeldetag: 11.08.1994
(51) Int. Cl.: B01D 29/00, B01D 46/52

(54) **Filtereinsatz und Verfahren zur Herstellung eines Filtereinsatzes**
Filter element and process for manufacturing a filter element
Elément filtrant et procédé de fabrication d'un élément filtrant

(30) Priorität: 27.08.1993 DE 4328846
(43) Veröffentlichungstag der Anmeldung: 29.03.1995
(73) Patentinhaber: FILTERWERK MANN & HUMMEL GMBH, 71631 Ludwigsburg (DE)
(72) Erfinder: Ernst, Volker, D-74343 Sachsenheim (DE); Klotz, Arthur, D-71686 Remseck (DE); Kolmeder, Michael, D-84130 Dingolfing (DE); Wimmer, Bernhard, D-84326 Rimbach (DE)
(74) Vertreter: Voth, Gerhard, Dipl.-Ing.

(56) Entgegenhaltungen:
- DE-B- 1 121 438
- DE-B- 2 807 546
- GB-A- 2 020 995
- US-A- 4 288 278

## Beschreibung

Die Erfindung betrifft ein Verfahren zur Herstellung eines Filtereinsatzes nach dem Oberbegriff des Hauptanspruchs sowie einen durch dieses Verfahren hergestellten Filtereinsatz.

Aus der DE-AS 12 99 534 ist ein Filtereinsatz aus gefaltetem Filtermaterial bekannt. Dieser weist quer zu den Faltenkanten verlaufende, mit dem Filtermaterial verbundene Klebemasse auf. Diese Klebemasse dient als Abstandshalter.

Bekannte Filter dieser Art für Kraftfahrzeugmotoren benutzen ebenfalls Klebemassen oder Leimraupen als Abstandshalter. Es werden gleichzeitig auch solche Leimraupen an den Seiten des Filtermittels während der Herstellung unterbrechungslos aufgetragen. Beim zick-zack-förmigen Falten des Filtermittels bilden diese Leimraupen die seitliche Abdichtung des Filtereinsatzes.

Ein Filtereinsatz dieser Art wird beispielsweise von der Firma FILTERWERK MANN + HUMMEL GMBH hergestellt und unter der Bezeichnung C 34 109/1 vertrieben. Diese sog. Rechteckfilter sind dort zweckmäßig, wo die Einbauverhältnisse ein solches Filter zulassen. Rechteckfilter gibt es in verschiedensten Dimensionen sowie Filterkapazitäten.

Im Zuge der fortschreitenden Entwicklung im Automobilbau und der Hinführung zu kompakten Fahrzeugen steht im Motorraum eines Fahrzeugs immer weniger Platz für ein Luftfilter zu Verfügung. Oft reicht der Platz für eine übliche Rechteckpatrone nicht aus, so daß teilweise auch bereits zwei Filter bzw. zwei Patronen an unterschiedlichen Stellen angeordnet werden.

Es ist Aufgabe der vorliegenden Erfindung, ein Verfahren zur Herstellung eines Filtereinsatzes sowie einen Filtereinsatz selbst zu schaffen, wobei das Ziel ein Filtereinsatz ist, der sich optimal an die vorgegebenen Raumverhältnisse anpaßt.

Diese Aufgabe wird ausgehend von dem Oberbegriff des Hauptanspruchs durch dessen kennzeichnende Merkmale gelöst.

Der Vorteil der Erfindung ist darin zu sehen, daß nunmehr ein Herstellverfahren geschaffen ist, das eine beliebige Struktur des Filtereinsatzes dadurch erzielt, daß die Leimauftragsvorrichtung, welche die seitliche Begrenzung des Filtereinsatzes und die seitliche Abdichtung desselben erzeugt, mit zwei Leimauftragsdüsen versehen ist, welche quer zu der Transportrichtung des Filtermittels bewegbar sind. Somit können auch Filtereinsätze hergestellt werden, die beispielsweise eine trapez- oder dreieckförmige Außenkontur aufweisen.

Aus der DE-PS 28 07 546 sind bereits kreisscheibenförmige Filterelemente bekannt. Diese Filterelemente werden aus einer Filtermaterialplatte herausgestanzt. Ein Nachteil dieses Herstellverfahrens ist jedoch der hohe Anteil an zu entsorgendem Abfallmaterial sowie die fehlende umlaufende Abdichtung des herausgestanzten Filterelements. Diese ist auch nachträglich nur mit erhöhtem Aufwand anzubringen.

Die Erfindung sieht vor, an der Leimauftragsvorrichtung zwei Auftragsdüsen vorzusehen, die damit zwei parallel verlaufende Leimraupen erzeugen. Diese Leimraupen weisen beispielsweise einen Abstand von 3 bis 5 mm auf und bilden dazwischenliegend die Trennlinie für zwei Filtereinsätze. Das Verfahren zeichnet sich damit durch eine nahezu 100%-ige Ausnutzung des Filtermittels aus.

Eine Ausgestaltung der Erfindung sieht vor, die Auftragsdüsen in Transportrichtung gegeneinander versetzt anzuordnen. Da die Auftragsdüsen Durchmesser von bis zu 10 mm aufweisen, gestattet diese versetzte Anordnung die Herstellung parallel verlaufender Leimraupen mit einem weitaus geringeren Abstand, als dies der Durchmesser der Auftragsdüsen bei nebeneinander liegender Anordnung zulassen würde.

Eine besonders vorteilhafte Ausgestaltung der Erfindung ist durch die Anordnung einer weiteren Leimauftragsvorrichtung gegeben, ebenfalls quer zur Transportrichtung bewegbar ist. Auch deren Leimauftragsdüsen bei dieser sind die beiden Leimauftragsdüsen in Transportrichtung versetzt angeordnet.

Mit zwei Leimauftragsvorrichtungen ist es möglich, die Produktivität einer Anlage zur Herstellung von Filtereinsätzen noch weiter zu erhöhen, wobei abwechselnd immer eine der Leimauftragsvorrichtungen in Betrieb ist, während die weitere Leimauftragsvorrichtung in ihre Ausgangsposition zurückkehrt.

Die Erfindung sieht vor, eine Schneidvorrichtung anzuwenden, welche das gefaltete und mit den Leimraupen versehene Filtermittel in einzelne Filterelemente trennt. Die Schneidvorrichtung schneidet das Filtermittel quer zur Transportvorrichtung durch. Das Steuersignal für den Schneidvorgang wird vorteilhaft über einen Sensor ausgelöst, der das jeweilige Leimraupenende oder den Leimraupenanfang oder einen auf dem Filtermittel angeordneten Meßpunkt abtastet und anhand dieses Signals einen Steuerimpuls erzeugt.

Es besteht gemäß einer weiteren Ausgestaltung der Erfindung auch die Möglichkeit, die Leimauftragsvorrichtungen in Transportrichtung bewegbar anzuordnen. Dies bedeutet, daß die Leimauftragsvorrichtungen auf einem XY-Träger montiert sind und damit jede beliebige Kontur des Filtereinsatzes herstellbar ist.

Ein Filter, der nach dem erfindungsgemäßen Verfahren hergestellt ist, hat den Vorteil, daß seine Außenkontur optimal an den vorhandenen Raum angepaßt werden kann, wobei sowohl eine als auch beide Stirnseiten abgewinkelt sein können. Außerdem besteht die Möglichkeit, auch nur Teile einer Stirnkante abzuschrägen, um die KOntur des Filtereinsatzes an die Kanten des Filtergehäuses anzupassen.

Die Erfindung wird nachfolgend anhand von Ausführungsbeispielen näher erläutert. Es zeigt
- Figur 1a: einen Filtereinsatz in einer Draufsichtdarstellung,
- Figur 1b: die Seitenansicht des in Figur 1a gezeigten Filtereinsatzes,
- Figur 2a: eine schematische Vorrichtung zur Durchführung des Verfahrens zur Herstellung eines Filtereinsatzes,
- Figur 2b: eine Detaildarstellung des Filtereinsatzes.

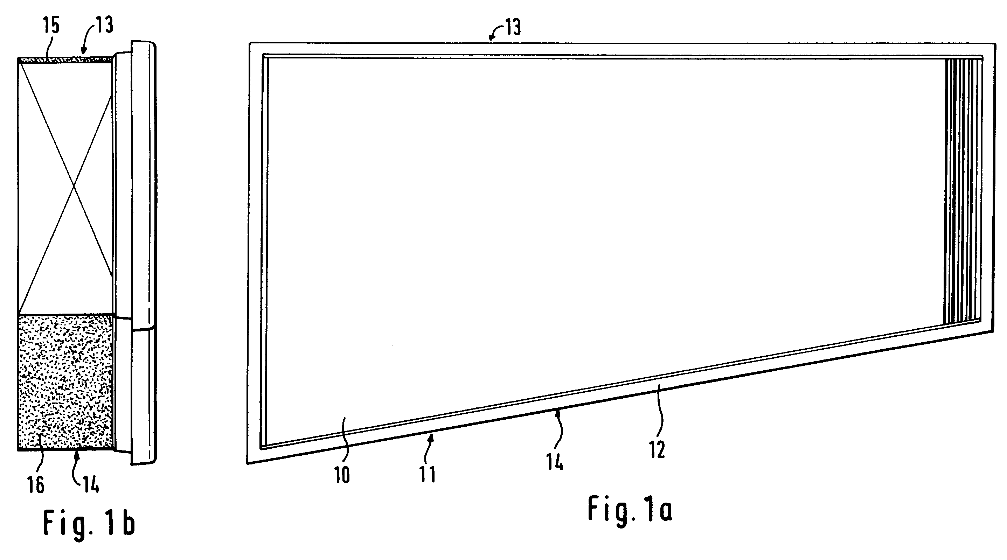

Der Filtereinsatz gemäß Figur 1a besteht aus einem zick-zack-förmig gefaltetem Filterelement 10. Dieses Filterelement ist beispielsweise ein Filterpapier. Der Filtereinsatz 11 ist mit einer umlaufenden PUR-Schaum-Dichtung 12 versehen. Während die obere Stirnseite 13 rechtwinklig zu der Faltung verläuft, hat die Stirnseite 14 einen geneigten Verlauf und ist den Einbauverhältnissen eines hier nicht dargestellten Gehäuses angepaßt.

Die in Figur 1b gezeigte Seitenansicht dieses Filters läßt an der oberen Stirnseite 13 eine Leimraupe 15 erkennen. Diese Leimraupe dichtet den Filtereinsatz an der Stirnseite 13 ab. An der Stirnseite 14 ist ebenfalls die durchlaufende Leimraupe 16 zu erkennen, welche den Filtereinsatz an dieser Stirnseite verschließt, so daß von der Draufsicht her gesehen Filtertaschen gebildet werden. In der Draufsicht gemäß Figur 1a lassen sich die Leimraupen nicht erkennen, da diese durch die PUR-Schaum-Dichtung 12 verdeckt sind.

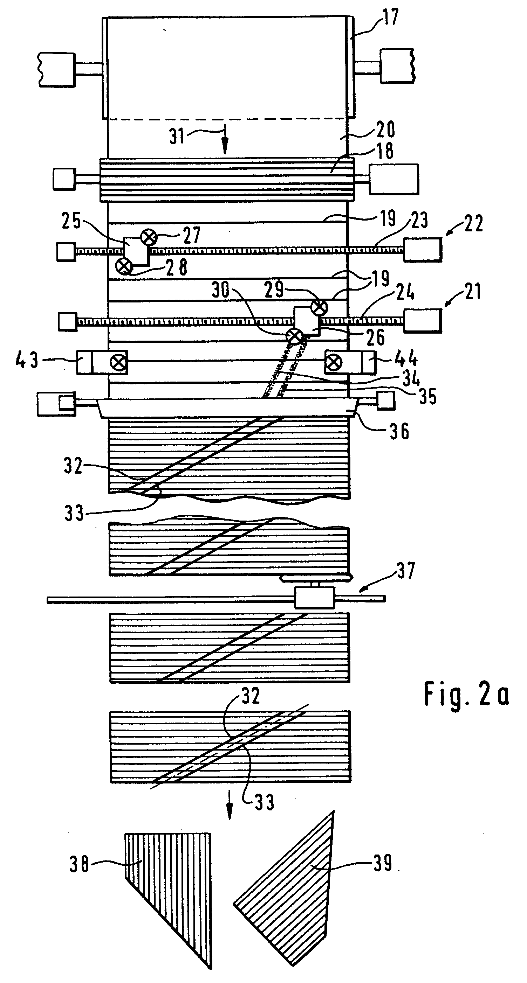

Eine Vorrichtung zur Durchführung des Verfahrens zur Herstellung des in Figur 1 gezeigten Filtereinsatzes ist in der schematischen Figur 2a dargestellt. Zunächst wird das Filtermittel bzw. das Filterpapier von einer Trommel 17 abgenommen und zwischen eine untere und eine obere Prägewalze 18 geführt. Die untere Prägewalze ist in der Zeichnung nicht sichtbar. Diese befindet sich unmittelbar unter der Prägewalze 18. Mittels dieser Prägewalzen werden Knickkanten 19 in das Filterelement eingeprägt. Zusätzlich können auch noch Noppen, Verstärkungssicken oder Abstandshalter eingeprägt werden. Anschließend wird das Filtermaterial 20 mit den erforderlichen Leimraupen versehen. Hierzu sind zwei Leimauftragsvorrichtungen 21, 22 vorgesehen. Diese bestehen jeweils aus einer Spindel 23, 24, an welcher sich Trägerköpfe 25, 26 befinden. Auf jedem dieser Trägerköpfe sind zwei Leimauftragsdüsen 27, 28, 29, 30 angeordnet. Während das Filtermaterial 20 unter den Leimauftragsvorrichtungen 21, 22 gemäß dem Pfeil 31 hindurchbewegt wird, erfolgt der Auftrag der Leimraupen 32, 33, 34, 35. Die Spindeln 23, 24 werden dabei entsprechend gedreht, so daß die Trägerköpfe 25, 26 eine Querbewegung ausführen. Der Trägerkopf 26 ist wie dargestellt aktiv, d. h. die Leimauftragsdüsen 29, 30 sind geöffnet und erzeugen zwei Leimraupen auf dem durchlaufenden Filtermaterial 20. Der Trägerkopf 25 ist in seine Ausgangsposition zurückgefahren, d. h. in die linksseitige Stellung. Die Leimauftragsdüsen 27, 28 sind noch geschlossen.

Die Trägerköpfe 25, 26 können auch mit einem Riemen oder Zahnriemen bewegt werden. Insbesondere bei der Verwendung eines Zahnriemens besteht die Möglichkeit, die Trägerköpfe mit sehr hoher Genauigkeit zu positionieren. Außerdem ist bei einem Riemen bzw. Zahnriemenantrieb die Verstellgeschwindigkeit etwas höher als bei einer Gewindespindel.

Sobald die Leimraupen 34, 35 fertiggestellt sind, wird der Trägerkopf 25 aktiv, während der Trägerkopf 26 von der rechtsseitigen Endposition in die linksseitige Ausgangsposition bewegt wird. Es ist also im wesentlichen immer eine Leimauftragsvorrichtung in Betrieb.

Selbstverständlich würde auch die Möglichkeit bestehen, allein mit einer Leimauftragsvorrichtung die Filtereinsätze herzustellen bzw. das Verfahren durchzuführen. Dazu ist es jedoch erforderlich, daß diese Leimauftragsvorrichtung mit einer sehr hohen Geschwindigkeit von der Endposition in die Ausgangsposition gebracht wird, um - sofern die Leimauftragsdüsen nicht gestoppt werden - die Beleimung eines längeren Zwischenstücks zu vermeiden. Die Beleimung von zwei bis drei Falten quer zur Transportrichtung kann unter Umständen in Kauf genommen werden. Wird eine Beleimung von mehreren Falten verursacht, so kann dieses Zwischenstück nicht verwendet werden und es würde unnötiger Abfall entstehen.

Es sind weiterhin zwei Leimauftragsvorrichtungen 43, 44 vorgesehen. Diese erzeugen Leimraupen an den beiden Stirnseiten. Nach dem Auftragen sämtlicher Leimraupen wird über einen Faltensteller 36 die Zick-zack-Faltung des Filtermaterials durchgeführt.

Das Filtermaterial gelangt anschließend in einen hier nicht dargestellten Aushärteofen und wird nach dem Aushärten mit einer Schneidvorrichtung 37 auf Länge geschnitten. Anschließend werden die rechteckigen Filterelemente mit einer geeigneten Schneidvorrichtung, beispielsweise einer Säge oder einem Trenngerät zwischen den Leimraupen 32, 33 durchgetrennt. Damit sind die Rohfilterelemente 38, 39 bezüglich ihrer Form hergestellt. Anschließend werden diese mit der in Figur 1 gezeigten PUR-Schaum-Dichtung versehen.

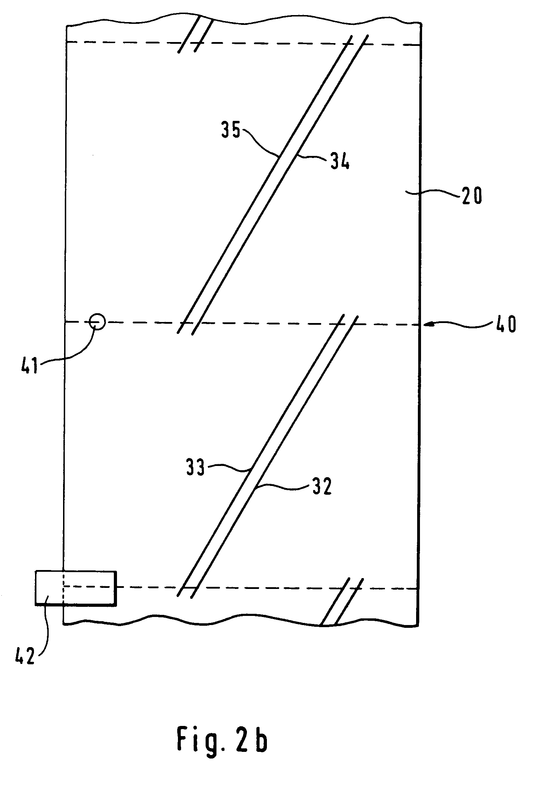

In Figur 2b ist in einer Detaildarstellung nochmals die Herstellung der Leimraupen 32 bis 35 gezeigt. Es ist ersichtlich, daß die Leimraupenpaare sich in einem bestimmten Bereich überlappen. In diesem Bereich 40 werden die Rohfilterelemente getrennt.

Zur Erkennung der Schneidposition für die Schneidvorrichtung 37 ist im Bereich 40 eine Markierung 41 auf dem Filtermaterial 20 aufgebracht. Diese Markierung wird von einem Sensorelement 42 abgetastet und löst den Schneidvorgang aus.

Es besteht auch die Möglichkeit, Leimraupenende bzw. Leimraupenanfang mit einem geeigneten Sensor festzustellen und dies zur Auslösung des Schneidvorgangs heranzuziehen.

## Patentansprüche

1. Verfahren zur Herstellung eines plattenförmigen Filtereinsatzes, bestehend aus einem zick-zack-förmig gefalteten Filtermittel, wobei zunächst in einem ersten Arbeitsschritt Knickkanten geprägt werden, anschließend mit Leimauftragsvorrichtungen, welche mit Leimauftragsdüsen versehen sind, wenigstens zwei Leimraupen auf die Oberfläche des Filtermittels aufgetragen werden und danach die Faltung durchgeführt wird, dadurch gekennzeichnet, daß wenigstens eine der Leimauftragsvorrichtungen (21) mit zwei Leimauftragsdüsen (27, 28, 29, 30) versehen ist, die quer zu der Transportrichtung des Filtermaterials (20) bewegt werden, wodurch zwei parallel verlaufende Leimraupen (34, 35) erzeugt werden, während das Filtermaterial (20) entlang der Transportrichtung bewegt wird, und daß eine Schneidvorrichtung (37) vorgesehen ist, welche das gefaltete Filtermaterial (20) in einzelne Filterelemente trennt, und daß ferner ein Durchtrennungsschnitt mit einer weiteren Schneidvorrichtung zwischen den parallel verlaufenden Leimraupen (34, 35) erfolgt, wobei die Leimraupen die seitliche Abdichtungen erzeugen.

2. Verfahren nach Anspruch 1, dadurch gekennzeichnet, daß die Leimauftragsvorrichtung (21) mit einem Trägerkopf (26) versehen ist, welcher eine erste Auftragsdüse (29) aufweist und wobei an dem Trägerkopf (26) eine weitere Auftragsdüse (30) vorgesehen ist und somit die zwei parallel verlaufenden Leimraupen (34, 35) erzeugt werden.

3. Verfahren nach Anspruch 2, dadurch gekennzeichnet, daß die Auftragsdüsen (29, 30) in Transportrichtung gegeneinander versetzt angeordnet sind.

4. Verfahren nach einem der vorherigen Ansprüche, dadurch gekennzeichnet, daß wenigstens eine weitere Leimauftragsvorrichtung (22) vorgesehen ist, wobei diese einen Trägerkopf (25) aufweist, welcher quer zur Transportrichtung bewegbar ist, auf dem zwei Leimauftragsdüsen (27, 28) angeordnet sind und diese Leimauftragsvorrichtung zu der ersten Leimauftragsvorrichtung (21) in Transportrichtung versetzt angeordnet ist.

5. Verfahren nach Anspruch 4, dadurch gekennzeichnet, daß während des Auftrags von Leimraupen mittels einer Leimauftragsvorrichtung (21) die weitere Leimauftragsvorrichtung (22) in ihre Ausgangsposition zurückfährt.

6. Verfahren nach Ansprüch 1, dadurch gekennzeichnet, daß die Schneidvorrichtung (37) eine Schneidbewegung quer zur Transportrichtung des Filtermittels ausführt und wobei das Steuersignal für den Schneidvorgang über einen Sensor (42) ausgelöst wird.

7. Verfahren nach Anspruch 6, dadurch gekennzeichnet, daß der Sensor (42) das jeweilige Leimraupenende oder den Leimraupenanfang oder einen auf dem Filtermittel angeordneten Meßpunkt (41) sensiert.

8. Verfahren nach einem der vorherigen Ansprüche, dadurch gekennzeichnet, daß ein Faltensteller (36) die Signale für die Steuerung der Leimauftragsvorrichtungen (21, 22) und der Auftragsdüsen (27 - 30) erzeugt.

9. Verfahren nach einem der vorherigen Ansprüche, dadurch gekennzeichnet, daß die Leimauftragsvorrichtungen (21, 22) in Transportrichtung bewegbar angeordnet sind.

10. Verfahren nach einem der vorherigen Ansprüche, dadurch gekennzeichnet, daß nach Aushärtung des aufgetragenen Leims entlang der Leimraupe der Filtereinsatz (38, 39) auf Maß geschnitten wird.

11. Filtereinsatz, bestehend aus einem zick-zack-förmig gefalteten Filtermaterial (20), wobei eine stirnseitige Abdichtung an den quer zur Faltung verlaufenden Stirnseiten über Leimraupen vorgesehen dadurch gekennzeichnet, daß wenigstens eine oder ein Teil der Stirnseiten (14) unter einem Winkel ungleich 90° in Bezug auf die Faltenausrichtung verläuft.

12. Filter nach Anspruch 11 , dadurch gekennzeichnet, daß zur Ausnutzung von beliebigen Gehäusestrukturen das zick-zack-förmig gefaltete Filtermaterial (20) einen von einfachen geometrischen Formen abweichenden Querschnitt aufweist.

## Claims

1. Method of producing a plate-like filter insert, comprising a filter means which is folded in a zigzag-like manner, wherein, in a first operational step, bent edges are initially stamped, then at least two glue beads are applied to the surface of the filter means by glue applicators, which are provided with glue applying nozzles, and thereafter the folding is effected, characterised in that at least one of the glue applicators (21) is provided with two glue applying nozzles (27, 28, 29, 30), which are moved transversely relative to the direction of conveyance of the filter material (20), whereby two glue beads (34, 35), which extend in a parallel manner, are produced, while the filter material (20) is moved along the direction of conveyance, and in that a cutting apparatus (37) is provided, which divides the folded filter material (20) into individual filter elements, and in that, furthermore, a separating cut is effected with an additional cutting apparatus between the glue beads (34, 35) which extend in a parallel manner, the glue beads producing the lateral seals.

2. Method according to claim 1, characterised in that the glue applicator (21) is provided with a carrier head (26), which has a first glue applying nozzle (29), an additional glue applying nozzle (30) being provided on the carrier head (26), and, in consequence, the two glue beads (34, 35) are produced, which extend in a parallel manner.

3. Method according to claim 2, characterised in that the glue applying nozzles (29, 30) are disposed in an offset manner relative to each other when viewed with respect to the direction of conveyance.

4. Method according to one of the previous claims, characterised in that at least one additional glue applicator (22) is provided, said applicator having a carrier head (25) which is displaceable transversely relative to the direction of conveyance, on which carrier head two glue applying nozzles (27, 28) are disposed, and said glue applicator is disposed in an offset manner relative to the first glue applicator (21) when viewed with respect to the direction of conveyance.

5. Method according to claim 4, characterised in that the additional glue applicator (22) returns to its initial position during the application of glue beads by means of a glue applicator (21).

6. Method according to claim 1, characterised in that the cutting apparatus (37) effects a cutting movement transversely relative to the direction of conveyance of the filter means, the control signal for the cutting operation being actuated via a sensor (42).

7. Method according to claim 6, characterised in that the sensor (42) senses the actual end of the glue bead or the start of the glue bead, or a measurement point (41) disposed on the filter means.

8. Method according to one of the previous claims, characterised in that a fold regulator (36) generates the signals for controlling the glue applicators (21, 22) and the glue applying nozzles (27 - 30).

9. Method according to one of the previous claims, characterised in that the glue applicators (21, 22) are disposed so as to be displaceable in the direction of conveyance.

10. Method according to one of the previous claims, characterised in that the filter insert (38, 39) is cut to size after the applied glue has hardened along the glue bead.

11. Filter insert, comprising a filter material (20) which is folded in a zigzag-like manner, an end-face seal being provided via glue beads on the end faces extending transversely relative to the folding, characterised in that at least one or some of the end faces (14) extend at an angle other than 90° relative to the fold alignment.

12. Filter according to claim 11, characterised in that, to utilise any desirable housing constructions, the filter material (20) which is folded in a zigzag-like manner has a cross-section deviating from simple geometric configurations.

## Revendications

1. Procédé de fabrication d'un élément filtrant se présentant sous forme d'une plaque, constitué d'un moyen filtrant plié en forme de zigzag, où d'abord, lors d'une première étape de travail, des bords coudés sont gaufrés après avec des dispositifs d'application de colle, équipés de buses d'application de colle, au moins deux chenilles ou cordons de colle étant appliqués sur la surface du moyen filtrant, puis le pliage étant effectué,
caractérisé en ce qu'
au moins l'un des dispositifs d'application de colle (21) est pourvu de deux buses d'application de colle (27, 28, 29, 30), qui sont déplacées transversalement par rapport à la direction de transport du matériau filtrant (20), faisant que sont produits deux chenilles ou cordons de colle (34, 35) s'étendant parallèlement, le matériau filtrant (20) étant déplacé le long du dispositif de transport, et en ce qu'est prévu un dispositif de découpage (37) qui assure la séparation du matériau filtrant (20) plié en constituant des éléments filtrants individuels, et en ce qu'en outre une découpe de séparation est effectuée avec un autre dispositif de découpage, entre les chenilles ou cordons de colle (34, 35) s'étendant parallèlement, les chenilles ou cordons de colle produisant les joints d'étanchéité latéraux.

2. Procédé selon la revendication 1,
caractérisé en ce que
le dispositif d'application de colle (21) est pourvu d'une tête support (26) qui présente une première buse d'application (29), et sur la tête support (26) étant prévue une autre buse d'application (30) et les deux chenilles ou cordons de colle (34, 35) s'étendant parallèlement, sont ainsi réalisés.

3. Procédé selon la revendication 2,
caractérisé en ce que
les buses d'application (29, 30) sont disposées décalées l'une par rapport à l'autre dans la direction du transport.

4. Procédé selon l'une des revendications précédentes,
caractérisé en ce qu'
il est prévu au moins un autre dispositif applicateur de colle (22), celui-ci présentant une tête support (25), déplaçable transversalement par rapport à la direction de transport, tête sur laquelle sont disposées deux buses d'application de colle (27, 28), et ce dispositif applicateur de colle étant disposé décalé dans la direction de transport, par rapport au premier dispositif applicateur de colle (21).

5. Procédé selon la revendication 4,
caractérisé en ce que
pendant l'application de chenilles ou cordons de colle, au moyen d'un premier dispositif applicateur de colle (21), l'autre dispositif applicateur de colle (22) revient à sa position initiale.

6. Procédé selon la revendication 1,
caractérisé en ce que
le dispositif de découpage (37) effectue un déplacement de découpage transversalement par rapport à la direction de transport du moyen filtrant et le signal de commande destiné au processus de découpage étant déclenché par l'intermédiaire d'un capteur (42).

7. Procédé selon la revendication 6,
caractérisé en ce que
le capteur (42) appréhende l'extrémité respective de la chenille ou cordon de colle ou bien l'amorce respective de la chenille ou cordon de colle, ou bien un point de mesure (41) disposé sur le moyen de filtrage.

8. Procédé selon l'une des revendications précédentes,
caractérisé en ce qu'
un formateur de pli (36) génère les signaux destinés à la commande des dispositifs applicateurs de colle (21, 22) et des buses d'application (27 - 30).

9. Procédé selon l'une des revendications précédentes,
caractérisé en ce que
les dispositifs applicateurs de colle (21, 22) sont disposés déplaçables dans la direction de transport.

10. Procédé selon l'une des revendications précédentes,
caractérisé en ce qu'
après durcissement de la colle appliquée, le long de la chenille ou cordon de colle, l'élément filtrant (38, 39) est coupé à la dimension.

11. Elément filtrant, constitué d'un matériau filtrant (20) plié en forme de zigzag, un joint d'étanchéité situé côté frontal étant prévu, par l'intermédiaire de chenilles ou cordons de colle, sur les faces frontales s'étendant transversalement par rapport au pliage,
caractérisé en ce qu'
au moins l'une ou une partie des faces frontales (14) s'étend sous un angle différent de 90° par rapport à la direction de pliage.

12. Filtre selon la revendication 11,
caractérisé en ce que
pour exploiter des structures de carter quelconques, le matériau filtrant (20) plié en forme de zigzag présente une section transversale différant de formes géométriques simples.
